# FASCICULE DE BREVET EUROPEEN

(11) **EP 0 732 573 B1**
(45) Date de publication et mention de la délivrance du brevet: **26.09.2001**
(21) Numéro de dépôt: 96400507.8
(22) Date de dépôt: 12.03.1996
(51) Int. Cl.: G01L 23/22

(54) **Procédé et dispositif de reconnaissance de signaux de vibrations, par exemple les cliquetis d'un moteur à combustion interne**
Verfahren und Vorrichtung zur Erkennung von Vibrationssignalen, z.B. dem Klopfen eines internen Verbrennungsmotors
Method and device for recognizing vibration signals, e.g. knocking of internal combustion engines

(30) Priorité: 15.03.1995 FR 9503004
(43) Date de publication de la demande: 18.09.1996
(73) Titulaire: MAGNETI MARELLI FRANCE, 92002 Nanterre Cédex (FR)
(72) Inventeur: Boucly, Bernard, 78150 Le Chesnay (FR)
(74) Mandataire: Bérogin, Francis

(56) Documents cités:
- EP-A- 0 421 952
- EP-A- 0 609 846
- GB-A- 2 215 841
- GB-A- 2 218 810
- US-A- 5 170 358
- PATENT ABSTRACTS OF JAPAN vol. 9, no. 176 (M-398), 20 Juillet 1985 & JP 60 045781 A (NIPPON JIDOSHA BUHIN SOGO KENKYUSHO KK), 12 Mars 1985,
- PATENT ABSTRACTS OF JAPAN vol. 8, no. 97 (P-272), 8 Mai 1984 & JP 59 011407 A (NISSAN JIDOSHA KK), 21 Janvier 1984,
- PATENT ABSTRACTS OF JAPAN vol. 18, no. 196 (M-1589), 6 Avril 1994 & JP 06 002601 A (FUJITSU TEN LTD.), 11 Janvier 1994,
- PATENT ABSTRACTS OF JAPAN vol. 010, no. 160 (P-465), 7 Juin 1986 & JP 61 013125 A (NISSAN JIDOSHA KK), 21 Janvier 1986,
- PATENT ABSTRACTS OF JAPAN vol. 014, no. 121 (M-0946), 7 Mars 1990 & JP 01 318744 A (JAPAN ELECTRON CONTROL SYST CO LTD), 25 Décembre 1989,
- PATENT ABSTRACTS OF JAPAN vol. 005, no. 126 (P-075), 14 Août 1981 & JP 56 064621 A (NISSAN MOTOR CO LTD), 1 Juin 1981,

## Description

La présente invention concerne un procédé et un dispositif de reconnaissance de signaux issus de capteurs de vibrations embarqués sur un véhicule automobile. L'application considérée et décrite ici concerne plus particulièrement un procédé et un dispositif de reconnaissance de cliquetis d'un moteur à combustion interne ; cependant, il est clair que l'invention s'applique à tout système susceptible de produire des vibrations critiques.

Le cliquetis est un régime de fonctionnement se traduisant par des vibrations et un bruit indésirables dû à un allumage prématuré du mélange combustible lors de la phase de compression dans les cylindres d'un moteur, lorsque les pistons approchent de leur point mort haut. Ces vibrations sont nuisibles au fonctionnement et à l'endurance du moteur. Il est donc souhaitable de détecter sa présence afin de mettre en oeuvre des moyens visant à l'éliminer, par exemple en faisant varier de façon appropriée l'avance à l'allumage.

On connaît déjà divers procédés et dispositifs de reconnaissance de cliquetis. Les dispositifs classiques de l'art antérieur comprennent généralement un capteur du type accéléromètre, fixé sur le bloc moteur et sensible aux vibrations aux fréquences de cliquetis ; l'activité du capteur est commandée par une fenêtre temporelle de détection logicielle, dont les caractéristiques de phase et de durée sont calculées par un microcontrôleur, par exemple selon une cartographie adaptée au moteur, à partir des données fournies par un capteur de position angulaire du vilebrequin. Les dispositifs classiques comprennent en outre un ou plusieurs filtres sélectifs en fréquence, un redresseur simple ou double alternance et un ou plusieurs intégrateurs. Les procédés classiques consistent à capter des vibrations au niveau du moteur, traiter ces signaux par la fenêtre temporelle de détection, puis, successivement, les filtrer, les redresser et les intégrer.

Ces dispositifs et ces procédés présentent un grand nombre d'inconvénients. Tout d'abord, les valeurs des composants utilisés, en particulier des filtres, dépendent du type du moteur ; le dispositif nécessite donc une adaptation matérielle en fonction de la motorisation utilisée. Il en résulte que les caractéristiques de détection sont fixes et difficilement modifiables. De plus, la génération d'une fenêtre temporelle de détection en temps réel pose des problèmes de vitesse de calcul.

Par ailleurs, il existe une forte incertitude sur le diagnostic du fonctionnement de tels dispositifs au plan de la structure et de la connexion du capteur : par exemple, la technique actuelle ne permet pas de distinguer un capteur en court-circuit d'un capteur débranché.

La présente invention vise à fournir un procédé et un dispositif de reconnaissance convenant sans aucun réglage à tout type de moteur, ne nécessitant pas de fenêtre temporelle de détection, tels que les caractéristiques de détection peuvent être modifiées à volonté, par exemple en garage, lors d'un contrôle technique, au fur et à mesure du vieillissement du véhicule, et visant à répondre à la norme de diagnostic embarqué OBD2 (On Board Diagnosis 2).

Dans ce but, la présente invention propose un procédé de reconnaissance d'au moins un signal à traiter, issu d'au moins un capteur de vibrations embarqué sur un véhicule automobile, comprenant des étapes consistant à :
(a) sélectionner, dans au moins une table cartographique de données préalablement chargées dans une première mémoire, un emplacement mémoire unique, en fonction d'au moins un paramètre de fonctionnement du moteur,
(b) transférer de la première mémoire à des moyens de décodage les données contenues dans ledit emplacement mémoire unique,
(c) transmettre à une seconde mémoire, à partir des moyens de décodage, parmi les données contenues dans ledit emplacement mémoire unique de la première mémoire, une adresse mémoire associée à un signal de référence et un instant d'émission de ce signal,
(d) fournir ledit signal de référence à une première entrée de moyens de multiplication,
(e) fournir un signal, issu du capteur de vibrations, à une deuxième entrée des moyens de multiplication,
(f) effectuer le produit des signaux des entrées dans les moyens de multiplication,
(g) redresser le signal de sortie des moyens de multiplication dans des moyens redresseurs,
(h) intégrer le signal de sortie des moyens redresseurs dans des moyens d'intégration,
(i) remettre à zéro les moyens d'intégration à l'aide d'un signal fourni par les moyens de décodage à partir des données contenues dans ledit emplacement mémoire unique de la première mémoire,
(j) reconnaître la présence ou l'absence dudit signal à traiter par comparaison, dans des moyens de comparaison, du signal de sortie des moyens d'intégration à un seuil.

Pour offrir une meilleure sensibilité et précision de détection, le seuil peut avantageusement être extrait de l'emplacement mémoire sélectionné en fonction dudit paramètre de fonctionnement du moteur.

Pour assurer le diagnostic du fonctionnement du capteur, le procédé proposé peut en outre avantageusement comprendre des étapes de diagnostic consistant, après déroulement des étapes (a) et (b), à
transmettre, dans l'étape (c), une adresse mémoire et un instant associés à un signal de référence de diagnostic,
substituer le signal de référence de diagnostic au signal de référence dans les étapes (d) à (i), et remplacer l'étape (j) par les étapes consistant à
comparer, dans les moyens de comparaison, le signal de sortie des moyens d'intégration à un seuil contenu dans la table cartographique,
déterminer que le capteur de vibrations est débranché si le résultat de la comparaison est un "0" logique,
déterminer que le capteur de vibrations est en court-circuit si le résultat de la comparaison est un "1" logique.

De même, pour assurer le diagnostic de sa fonction entrée/sortie, le procédé peut en outre comprendre également des étapes de diagnostic consistant à
relier la première entrée des moyens de multiplication à leur deuxième entrée en fonction d'un ordre de commutation provenant de la table cartographique et envoyé par les moyens de décodage à des moyens de commutation,
après déroulement des étapes (a) et (b), transmettre, dans l'étape (c), une adresse mémoire et un instant associés à un signal de référence de diagnostic,
substituer le signal de référence de diagnostic au signal de référence dans les étapes (d) à (i), et remplacer l'étape (j) par les étapes consistant à
comparer, dans les moyens de comparaison, le signal de sortie des moyens d'intégration à une valeur de référence de diagnostic mémorisée dans la table cartographique et correspondant au carré du signal de référence de diagnostic redressé intégré, et
déterminer que le fonctionnement global est correct si le signal est égal à la valeur de référence de diagnostic.

Dans un mode de réalisation de l'invention avantageusement approprié à un capteur délivrant un signal analogique, le procédé comprend en outre les étapes consistant à
convertir les signaux numériques provenant de la seconde mémoire en des signaux analogiques, avec un gain fourni par les moyens de décodage à partir des données contenues dans ledit emplacement mémoire unique de la table cartographique,
convertir les signaux 'analogiques de sortie des moyens d'intégration en des signaux numériques.

Afin de disposer de signaux de référence pour comparaison aux signaux captés, le procédé peut en outre comprendre des étapes de création de signaux de référence consistant à
sélectionner un signal reconnu expérimentalement pour un ensemble donné de valeurs de paramètres de fonctionnement du moteur,
isoler ce signal en lui appliquant une fenêtre temporelle dont les caractéristiques correspondent au moment d'apparition du signal,
filtrer ce signal dans un filtre passe-bande dont la bande passante correspond à celle du signal,
transmettre le signal de référence obtenu en sortie du filtre passe-bande à la deuxième mémoire.

La présente invention propose également un dispositif de reconnaissance d'au moins un signal à traiter, issu d'au moins un capteur de vibrations embarqué sur un véhicule automobile, destiné à la mise en oeuvre du procédé précédent, comme défini dans la revendication 8.

Pour assurer également le diagnostic précité, le dispositif de reconnaissance peut comprendre en outre des moyens de diagnostic consistant en des moyens de commutation disposés entre les entrées des moyens de multiplication, et connectés à une sortie des moyens de décodage.

Dans un mode de réalisation de l'invention avantageusement adapté à un capteur analogique, le dispositif comprend en outre des moyens de conversion numérique-analogique disposés entre la sortie des moyens de seconde mémoire et la première entrée des moyens de multiplication, et connectés aux moyens de décodage, et des moyens de conversion analogique-numérique disposés entre la sortie des moyens d'intégration et l'entrée du microprocesseur.

De plus, le dispositif peut comprendre l'une ou plusieurs des mesures techniques suivantes : le capteur de vibrations peut être un capteur piézo-électrique. Les moyens de seconde mémoire consistent avantageusement en une mémoire reprogrammable. Le bus de liaison entre le microprocesseur et les moyens de décodage peut être un bus de liaison série ou un bus de liaison parallèle.

Le dispositif proposé est avantageusement réalisé sous la forme d'un circuit intégré spécifique d'une application (ASIC : Application Specific Integrated Circuit).

Dans une application du procédé proposé, le signal à traiter est issu d'un capteur de cliquetis d'un moteur à combustion interne.

La présente invention sera mieux comprise à la lecture de la description détaillée qui suit de modes particuliers de réalisation, donnés à titre d'exemples non limitatifs. La description se réfère aux dessins annexés, dans lesquels :
- la figure 1 est un synoptique de principe d'un premier mode de réalisation du dispositif,
- la figure 2 est un synoptique de principe d'un deuxième mode de réalisation du dispositif,
- la figure 3 est une représentation graphique illustrant l'étape de reconnaissance du procédé, par comparaison à un seuil, dans le cas de la présence de cliquetis,
- la figure 4 est une représentation graphique illustrant l'étape de reconnaissance du procédé, par comparaison à un seuil, dans le cas de l'absence de cliquetis,
- la figure 5 est une représentation graphique illustrant l'étape de diagnostic du capteur de vibrations en circuit ouvert,
- la figure 6 est une représentation graphique illustrant l'étape de diagnostic du capteur de vibrations en court-circuit,
- la figure 7 est un schéma illustrant l'étape de création de signaux de référence.

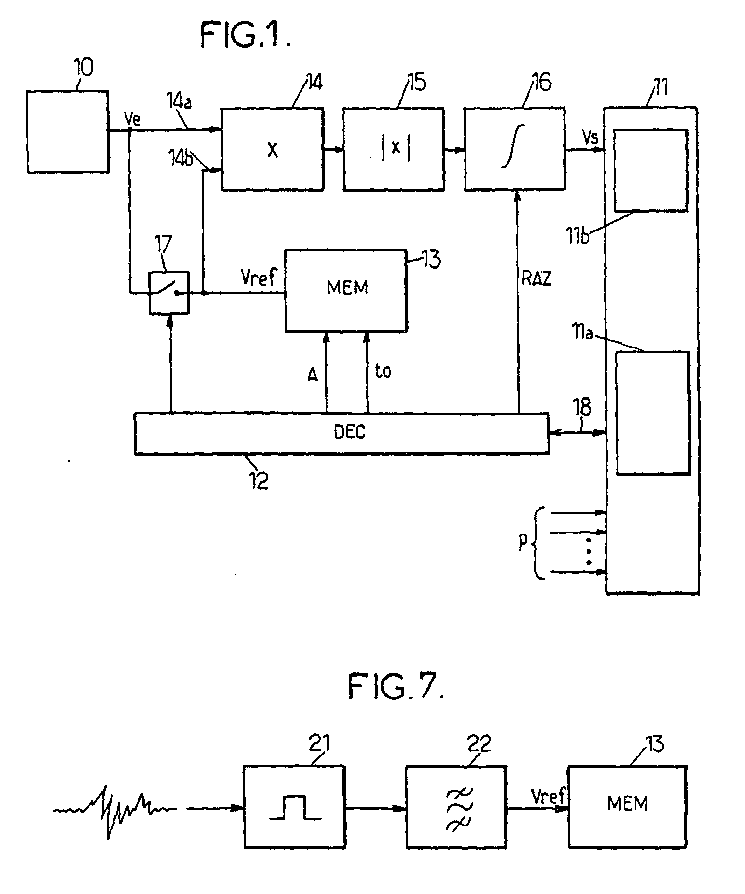

Le dispositif de reconnaissance de cliquetis dont la constitution de principe est montrée en figure 1 comporte un capteur 10 de vibrations, généralement constitué par un accéléromètre piézo-électrique, placé sur le bloc moteur. Le signal de sortie de ce capteur 10 est analogique. Dans un premier mode de réalisation de l'invention, où l'ensemble des composants utilisés est numérique à l'exception du capteur 10, le signal de sortie du capteur est donc tout d'abord converti en un signal numérique Ve dans un convertisseur analogique-numérique, non représenté sur la figure 1, placé à la sortie du capteur 10.

Le dispositif comprend par ailleurs un microprocesseur 11, qui peut être un microprocesseur de contrôle moteur, régulant notamment l'allumage et l'injection, avec une première mémoire contenant une ou plusieurs tables cartographiques 11a. Dans chaque emplacement mémoire de cette ou ces table(s), on a préalablement stocké un ensemble de données utiles à la reconnaissance, détaillées par la suite, correspondant à un ensemble p de valeurs de paramètres qui caractérisent le fonctionnement du moteur. Ces paramètres ont été calculés et/ou relevés à partir d'un ou plusieurs capteurs, et peuvent être par exemple la position angulaire du vilebrequin, le régime moteur, la pression d'admission de l'air d'alimentation dans un moteur à injection ou du mélange air-carburant dans un moteur à carburateur, et éventuellement la température de l'eau du circuit de refroidissement du moteur, comme image de la température du moteur. Le calcul et/ou la mesure de ces paramètres, à un instant donné du fonctionnement du moteur, à partir des capteurs appropriés, permet de sélectionner un emplacement unique correspondant dans la table 11a.

Le contenu de cet emplacement mémoire est alors transféré de la mémoire du microprocesseur 11 à un décodeur 12 par l'intermédiaire d'un bus 18 de liaison. Selon les exigences de vitesse de calcul et d'encombrement matériel, en choisira, entre un bus série, par exemple du type SPI, ou un bus parallèle, celui qui réalise le meilleur compromis.

Parmi les données contenues dans l'emplacement mémoire sélectionné dans la table 11a, le décodeur 12 transmet une adresse mémoire A, associée à un signal de cliquetis de référence Vréf, et un instant to d'émission de ce signal à une mémoire 13 de type RAM, EEPROM ou Flash EPROM, où sont enregistrés sous forme numérique des signaux de cliquetis de référence. On choisira avantageusement une mémoire 13 reprogrammable, afin de pouvoir y enregistrer à volonté de nouveaux signaux.

A l'instant to, la mémoire 13 fournit le signal numérique de cliquetis de référence Vréf à une première entrée 14b d'un multiplieur 14. Le signal numérique Ve, issu du capteur 10 de vibrations via le convertisseur analogique-numérique mentionné ci-dessus, attaque une deuxième entrée 14a du multiplieur 14. Celui-ci effectue le produit des signaux des entrées 14a et 14b. Ce produit est alors redressé au moyen d'un redresseur 15 de préférence double alternance, puis intégré par un intégrateur 16. La durée d'intégration de l'intégrateur 16, déterminée par l'émission d'un signal de remise à zéro RAZ, est commandée par le décodeur 12 en fonction des données contenues dans l'emplacement mémoire sélectionné et envoyées par le microprocesseur 11.

On obtient alors en sortie de l'intégrateur 16 un signal numérique Vs représentatif de l'amplitude du cliquetis, qu'on envoie au microprocesseur 11. L'emplacement mémoire sélectionné dans la table 11a contient une valeur de seuil S qui, de même que les autres données contenues dans la table 11a, est fonction d'un certain nombre de paramètres p de fonctionnement du moteur, tels que le régime moteur, la pression d'admission de l'air ou du mélange air-carburant et la température de l'eau du circuit de refroidissement.

Grâce à des moyens 11b de comparaison prévus dans le microprocesseur 11, on compare Vs au seuil S : si Vs est supérieur au seuil S, on dit que le cliquetis est détecté. Sinon, on dit qu'il n'y a pas de cliquetis.

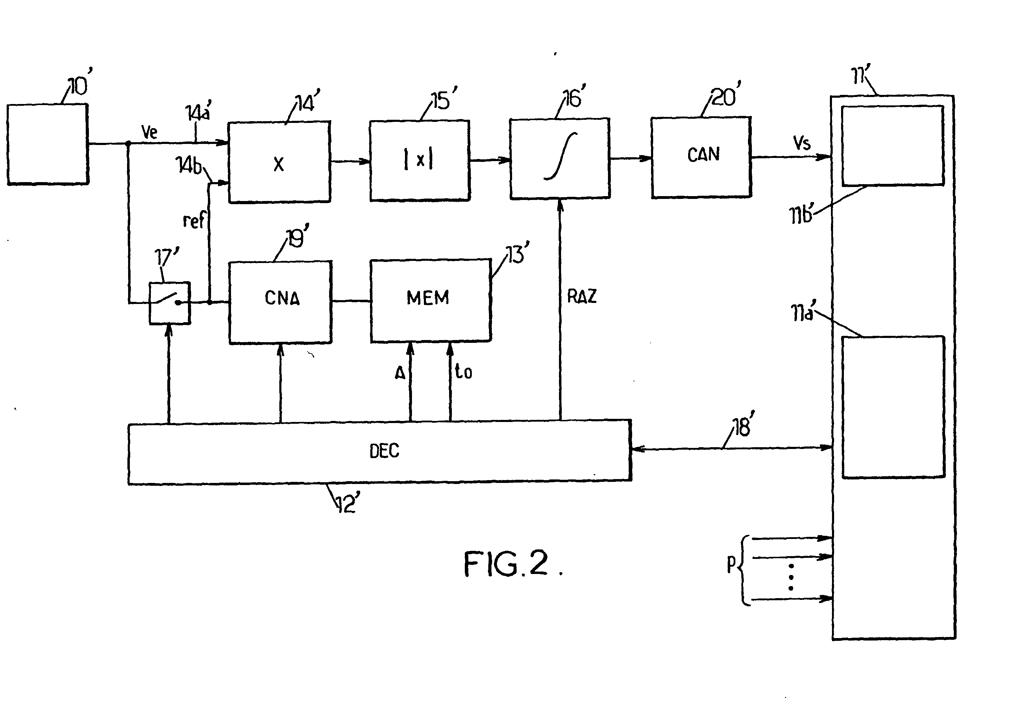

Dans un deuxième mode de réalisation de l'invention, illustré par la figure 2, et sur laquelle les éléments analogues du circuit sont désignés par les mêmes références affectées d'un symbole prime, le multiplieur 14', le redresseur 15' et l'intégrateur 16' sont des composants analogiques. Or la mémoire 13' et le microprocesseur 11' traitent des signaux numériques.

On prévoit donc un convertisseur numérique-analogique 19' entre la sortie de la mémoire 13' et l'entrée 14'b du multiplieur 14', et un convertisseur analogique-numérique 20' entre la sortie de l'intégrateur 16' et le microprocesseur 11'. En revanche, le capteur 10' de vibrations fournit un signal analogique Ve directement à l'entrée 14'a du multiplieur 14', sans passer par un convertisseur comme c'était le cas dans le mode de réalisation précédent. Dans ce deuxième mode de réalisation, le gain du convertisseur numérique-analogique 19' est commandé par le décodeur 12' en fonction des données contenues dans l'emplacement mémoire sélection dans la table 11'a et envoyées par le microprocesseur 11'.

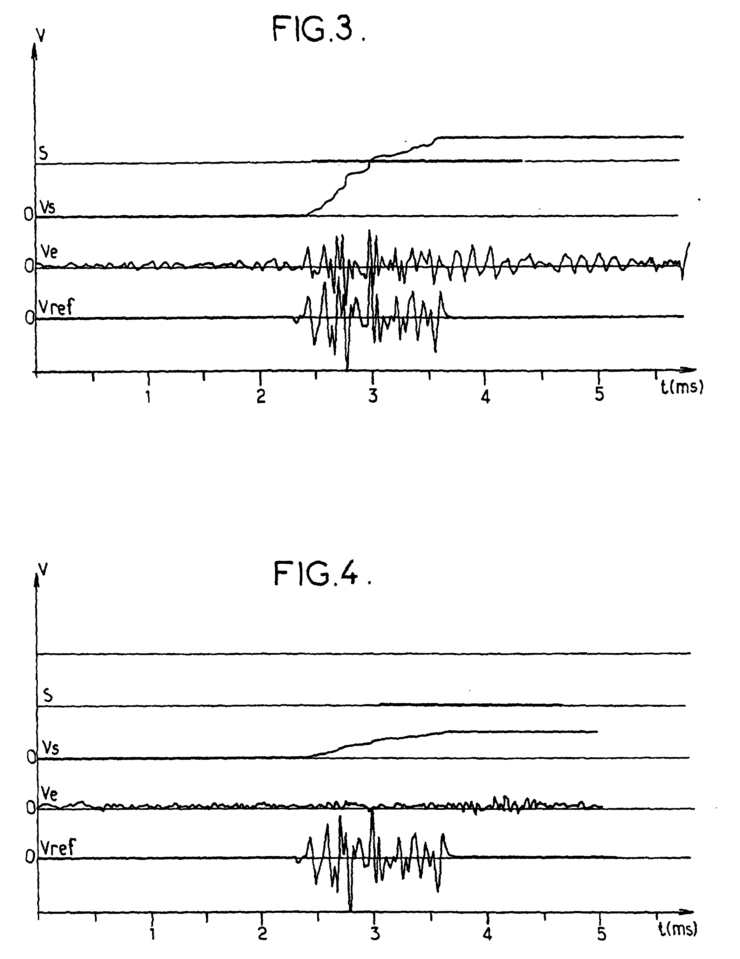

Les figures 3 et 4 illustrent des exemples de l'étape de comparaison au seuil S dans le cas de signaux Ve, Vs et Vréf analogiques. On a porté le temps t en abscisse et l'amplitude V des signaux en ordonnée et en superposition à partir de leurs origines respectives. Sur la figure 3, on voit que Vs devient supérieur au seuil S : il y a cliquetis. Sur la figure 4, on voit que Vs reste inférieur au seuil S: il n'y a pas cliquetis.

Le dispositif et le procédé de la présente invention permettent non seulement de reconnaître la présence ou l'absence de cliquetis, mais aussi de diagnostiquer le bon fonctionnement du capteur 10 de vibrations et de la chaîne entrée-sortie du dispositif. Ces opérations de diagnostic permettent de répondre aux exigences de la norme OBD2.

Afin de tester si le capteur 10 ou 10' est en circuit ouvert ou en court-circuit, le microprocesseur 11 ou 11' sélectionne une page mémoire contenant un signal de référence de diagnostic Vréf diag, constitué par exemple d'une alternance de sinusoïdes en phase avec la rotation du moteur. La période pourra être de 10 ms pour une vitesse de rotation de 3000 tours/minute.

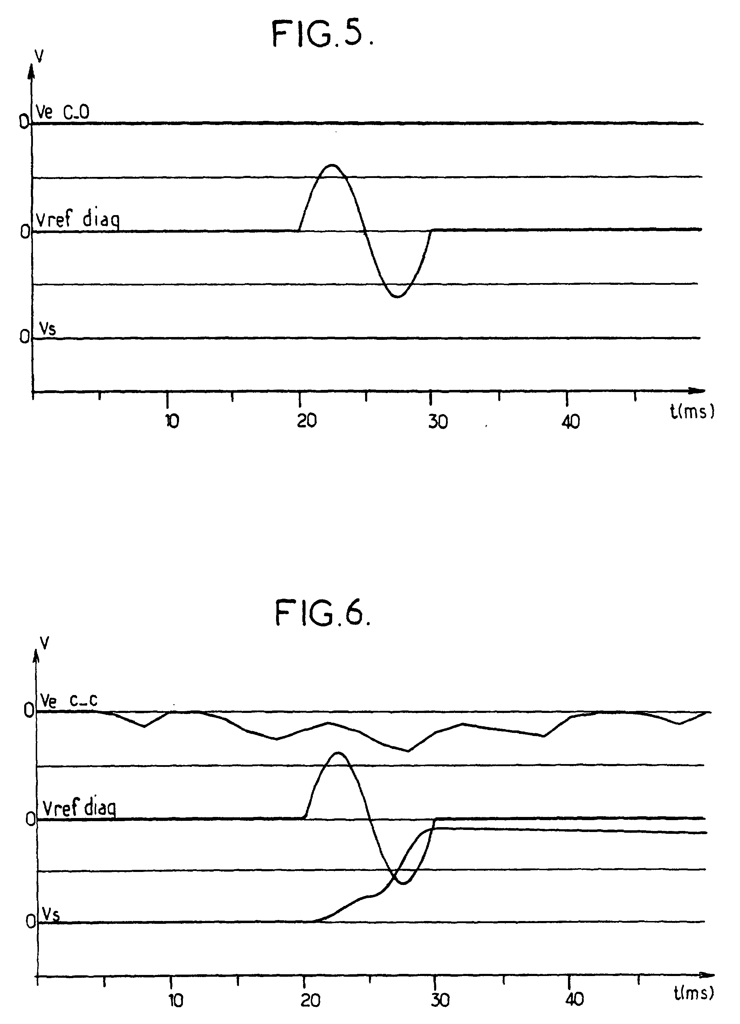

Si le capteur 10 ou 10' est en circuit ouvert, le signal d'entrée Ve c.o est nul, comme représenté sur la figure 5, donc le signal de sortie Vs aussi ; le résultat de l'étape de comparaison au seuil extrait de la table 11a ou 11'a est donc un "0" logique, ce qui signifie que le capteur 10 ou 10' est en circuit ouvert.

Si le capteur 10 ou 10' est en court-circuit, le signal d'entrée Ve c-c n'est pas nul, comme représenté sur la figure 6, mais on peut y trouver une composante alternative en phase avec la période de rotation du moteur. Le signal de sortie Vs présente alors une forte amplitude, supérieure au seuil ; le résultat de l'étape de comparaison est donc un "1" logique, ce qui signifie que le capteur 10 ou 10' est en court-circuit.

Afin de tester l'ensemble de la chaîne entrée-sortie du dispositif, le microprocesseur 11 ou 11' envoie une instruction de commutation au décodeur 12 ou 12', qui la transmet à un sélecteur 17 ou 17' connecté à une sortie du décodeur 12 ou 12' et disposé entre les deux entrées 14a et 14b ou 14'a et 14'b du multiplieur 14 ou 14'. Cette instruction permet de relier l'entrée 14b ou 14'b à l'entrée 14a. Le signal de référence de diagnostic est donc envoyé sur les deux entrées du multiplieur 14 ou 14'. Le produit redressé et intégré Vs est connu, pour un ensemble donné de paramètres p de fonctionnement du moteur, et est codé dans la table 11a ou 11'a sous forme d'une valeur de référence de diagnostic. On compare donc Vs à cette valeur de référence de diagnostic ; s'il y a égalité, alors on dit que la chaîne complète a été testée et qu'elle est fonctionnelle.

Les signaux de cliquetis de référence contenus dans la deuxième mémoire 13 ou 13' sont créés de la façon suivante.

L'homme de l'art sait reconnaître de façon expérimentale des signaux de cliquetis, par exemple en écoutant les signaux issus du capteur (10) de vibrations, ou en les observant sur l'écran d'un oscilloscope. Pour un ensemble de valeurs de paramètres de fonctionnement du moteur, tels que le régime moteur, la pression d'admission de l'air ou du mélange air-carburant, et la température de l'eau du circuit de refroidissement, on sélectionne donc un signal de cliquetis. Comme représenté sur la figure 7, ce signal est d'abord traité par une fenêtre temporelle 21 qui isole son moment d'apparition. Pour un moteur à quatre cylindres tournant à 3000 tr/min, la durée de la fenêtre est par exemple de 1,5 ms. Le signal passe ensuite dans un filtre passe-bande 22 dont la bande passante est centrée sur la fréquence du signal de cliquetis considéré. Les fréquences de coupure respectivement basse et haute du filtre 22 peuvent par exemple être de 6 kHz et 8 kHz. Le signal de cliquetis ainsi filtré est un signal de cliquetis de référence Vréf qui est alors mémorisé dans la deuxième mémoire 13 ou 13'. Dans le cas où le filtre passe-bande est un filtre analogique, le signal de sortie du filtre est converti en un signal numérique dans un convertisseur analogique-numérique placé en sortie du filtre, non représenté sur la figure 7, avant son transfert dans la deuxième mémoire.

Ainsi, le signal de cliquetis de référence est parfaitement défini, par son moment d'apparition, sa bande passante et son amplitude.

Le dispositif de la présente invention peut être réalisé sous forme d'un circuit présentant un nombre de composants très réduit, par exemple avantageusement, un circuit du type ASIC.

Seule l'application de la présente invention à la reconnaissance de cliquetis d'un moteur à combustion interne a été décrite ici ; cependant il est clair que l'invention s'applique au traitement de tout signal issu d'un ou plusieurs capteurs de vibrations embarqués sur un véhicule automobile.

Les avantages de la présente invention sont nombreux. Elle permet l'utilisaion des mêmes composants quelle que soit la motorisation envisagée et quelle que soit l'application considérée. De plus, la reconnaissance peut être adaptée en fonction des conditions de fonctionnement du moteur : on peut par exemple recharger la deuxième mémoire en y stockant de nouveaux signaux de référence selon le régime moteur. En outre, conformément à la norme OBD2, l'invention effectue le diagnostic du capteur de vibrations et du matériel réalisant la fonction entrée/sortie du dispositif. Enfin, le dispositif de l'invention met en oeuvre un nombre de composants électroniques très réduit.

## Revendications

1. Procédé de reconnaissance d'au moins un signal à traiter, issu d'au moins un capteur de vibrations (10, 10') embarqué sur un véhicule automobile, le procédé comprenant des étapes (g) et (h) consistant à :
(a) sélectionner, dans au moins une table cartographique (11a, 11'a) de données préalablement chargées dans une première mémoire (11, 11'), un emplacement mémoire unique, en fonction d'au moins un paramètre (p) de fonctionnement du moteur,
(b) transférer de la première mémoire (11, 11') à des moyens de décodage (12, 12') les données contenues dans ledit emplacement mémoire unique,
(c) transmettre à une seconde mémoire (13, 13') à partir des moyens de décodage (12, 12'), parmi les données contenues dans ledit emplacement mémoire unique de la première mémoire (11, 11'), une adresse mémoire (A) associée à un signal de vibrations de référence (Vréf), mémorisé dans ladite seconde mémoire (13, 13'), et un instant (to) d'émission dudit signal de référence (Vréf),
(d) fournir ledit signal de référence (Vréf) à une première entrée (14b, 14'b) de moyens de multiplication (14, 14'),
(e) fournir un signal (Ve), issu du capteur de vibrations (10, 10'), à une deuxième entrée (14a, 14'a) des moyens de multiplication (14, 14'),
(f) effectuer le produit des signaux des entrées (14a, 14b ; 14'a, 14'b) dans les moyens de multiplication (14, 14'),
(g) redresser le signal de sortie des moyens de multiplication dans des moyens redresseurs (15, 15'), et
(h) intégrer dans des moyens d'intégration (16, 16') le signal de sortie desdits moyens redresseurs (15,15'),
(i) remettre à zéro les moyens d'intégration (16, 16') à l'aide d'un signal fourni par les moyens de décodage (12, 12') à partir des données contenues dans ledit emplacement mémoire unique de la première mémoire (11, 11'), et
(j) reconnaître la présence ou l'absence dudit signal à traiter par comparaison, dans des moyens de comparaison (11b, 11'b), du signal (Vs) de sortie des moyens d'intégration (16, 16') à un seuil (S).

2. Procédé selon la revendication 1, **caractérisé en ce que** le seuil (S) est extrait de l'emplacement mémoire sélectionné en fonction dudit paramètre (p) de fonctionnement du moteur.

3. Procédé selon l'une quelconque des revendications 1 et 2, **caractérisé en ce qu'**il comprend en outre des étapes de diagnostic consistant, après déroulement des étapes (a) et (b), à
transmettre, dans l'étape (c), une adresse mémoire (A) et un instant d'émission (to) associés à un signal de référence de diagnostic (Vréf diag),
substituer le signal de référence de diagnostic (Vréf diag) au signal de référence (Vréf) dans les étapes (d) à (i), et remplacer l'étape (j) par les étapes consistant à
comparer, dans les moyens de comparaison (11b, 11'b), le signal (Vs) de sortie des moyens d'intégration (16, 16') à un seuil contenu dans la table cartographique (11a, 11'a)
déterminer que le capteur de vibrations (10, 10') est débranché si le résultat de la comparaison est un « 0 » logique
déterminer que le capteur de vibrations (10, 10') est en court-circuit si le résultat de la comparaison est un « 1 » logique.

4. Procédé selon l'une quelconque des revendications 1 à 3, **caractérisé en ce qu'**il comprend en outre des étapes de diagnostic consistant à
relier la première entrée (14b, 14'b) des moyens de multiplication (14, 14') à leur deuxième entrée (14a, 14'a) en fonction d'un ordre de commutation provenant de la table cartographique (11a, 11'a) et envoyé par les moyens de décodage (12, 12') à des moyens de commutation (17, 17'),
après déroulement des étapes (a) et (b), transmettre, dans l'étape (c), une adresse mémoire (A) et un instant d'émission (to) associés à un signal de référence de diagnostic (Vréf diag),
substituer le signal de référence de diagnostic (Vréf diag) au signal de référence (Vréf) dans les étapes (d) à (i), et remplacer l'étape (j) par les étapes consistant à
comparer, dans les moyens de comparaison (11b, 11'b), le signal (Vs) de sortie des moyens d'intégration (16, 16') à une valeur de référence de diagnostic mémorisée dans la table cartographique (11a, 11'a) et correspondant au carré du signal de référence de diagnostic redressé intégré, et
déterminer que le fonctionnement global est correct si le signal (Vs) est égal à la valeur de référence de diagnostic (Vréf diag).

5. Procédé selon l'une quelconque des revendications 1 à 4, **caractérisé en ce qu'**il comprend en outre les étapes consistant à
convertir (19') les signaux numériques provenant de la seconde mémoire (13') en des signaux analogiques, avec un gain fourni par les moyens de décodage (12') à partir des données contenues dans ledit emplacement mémoire unique de la table cartographique (11'a), et
convertir (20') les signaux analogiques de sortie des moyens d'intégration (16') en des signaux numériques.

6. Procédé selon l'une quelconque des revendications 1 à 5, **caractérisé en ce qu'**il comprend en outre des étapes de création de signaux de référence (Vréf) consistant à
sélectionner un signal reconnu expérimentalement pour un ensemble donné de valeurs de paramètres (p) de fonctionnement du moteur,
isoler ce signal en lui appliquant une fenêtre temporelle (21) dont les caractéristiques correspondent au moment d'apparition du signal,
filtrer ce signal dans un filtre passe-bande (22) dont la bande passante correspond à celle du signal,
transmettre le signal de référence (Vréf) obtenu en sortie du filtre passe-bande (22) à la deuxième mémoire (13, 13').

7. Procédé selon l'une quelconque des revendications 1 à 6, dans lequel le capteur (10, 10') est un capteur de cliquetis d'un moteur à combustion interne.

8. Dispositif de reconnaissance d'au moins un signal à traiter, issu d'au moins un capteur de vibrations (10, 10') embarqué sur un véhicule automobile, et destiné à la mise en oeuvre du procédé selon l'une quelconque des revendications 1 à 7, le dispositif comprenant
des moyens redresseurs (15, 15'), destinés à redresser un signal d'entrée qui leur est appliqué, et
des moyens d'intégration (16, 16'), destinés à intégrer le signal de sortie desdits moyens redresseurs (15, 15'),
et étant **caractérisé en ce qu'**il comprend en outre
un microprocesseur (11, 11') avec une première mémoire contenant au moins une table cartographique (11a, 11'a) de données préalablement chargées dans ladite première mémoire, et dans laquelle table cartographique (11a, 11'a) un emplacement mémoire unique est sélectionnable en fonction d'au moins un paramètre (p) de fonctionnement du moteur, reçu en entrée par ledit microprocesseur (11, 11'),
des moyens de décodage (12, 12') connectés, d'une part, à ladite première mémoire du microprocesseur (11, 11') par un bus de liaison (18, 18'), pour le transfert aux moyens de décodage (12, 12') des données contenues dans ledit emplacement mémoire unique, et, d'autre part, en sortie, à des moyens d'une seconde mémoire (13, 13'), pour le transfert à ces derniers, parmi les données transférées aux moyens de décodage (12, 12') depuis ledit emplacement mémoire unique, d'une adresse mémoire (A) associée à un signal de vibrations de référence (Vréf), mémorisé dans lesdits moyens de seconde mémoire (13, 13'), et d'un instant d'émission (to) dudit signal de référence (Vréf), ainsi qu'auxdits moyens d'intégration (16, 16') pour l'émission de signaux de remise à zéro définissant des durées d'intégration,
des moyens de multiplication (14, 14'), avec une première entrée (14b, 14'b) connectée à la sortie des moyens de seconde mémoire (13, 13') pour recevoir ledit signal de référence (Vréf), et une seconde entrée (14a, 14'a) connectée au capteur de vibrations (10, 10'), pour recevoir un signal (Ve) issu dudit capteur (10, 10'), et dont la sortie est connectée à l'entrée desdits moyens redresseurs (15, 15'),
ledit microprocesseur (11, 11') comprenant également des moyens de comparaison (11b, 11'b), connectés à la sortie desdits moyens d'intégration (16, 16'), pour comparer le signal de sortie (Vs) desdits moyens d'intégration (16, 16') à un seuil (S) et reconnaître la présence ou l'absence dudit signal à traiter.

9. Dispositif selon la revendication 8, **caractérisé en ce qu'**il comprend en outre des moyens de diagnostic comprenant des moyens de commutation (17, 17') disposés entre, les entrées (14a, 14b; 14'a, 14'b) des moyens de multiplication (14, 14'), et connectés à une sortie des moyens de décodage (12, 12').

10. Dispositif selon l'une quelconque des revendications 8 et 9, **caractérisé en ce qu'**il comprend en outre des moyens de conversion numérique-analogique (19') disposés entre la sortie des moyens de seconde mémoire (13') et la première entrée (14'b) des moyens de multiplication (14'), et connectés aux moyens de décodage (12'), et des moyens de conversion analogique-numérique (20') disposés entre la sortie des moyens d'intégration (16') et l'entrée du microprocesseur (11').

11. Dispositif selon l'une quelconque des revendications 8 à 10, **caractérisé en ce que** le capteur de vibrations (10, 10') est un capteur piézo-électrique.

12. Dispositif selon l'une quelconque des revendications 8 à 11, **caractérisé en ce que** les moyens de seconde mémoire (13, 13') consistent en une mémoire reprogrammable.

13. Dispositif selon l'une quelconque des revendications 8 à 12, **caractérisé en ce que** le bus (18, 18') de liaison entre le microprocesseur (11, 11') et les moyens de décodage (12, 12') est un bus de liaison série.

14. Dispositif selon l'une quelconque des revendications 8 à 12, **caractérisé en ce que** le bus (18, 18') de liaison entre le microprocesseur (11, 11') et les moyens de décodage (12, 12') est un bus de liaison parallèle.

15. Dispositif selon l'une quelconque des revendications 8 à 14, **caractérisé en ce qu'**il est réalisé sous la forme d'un circuit intégré spécifique d'une application.

## Patentansprüche

1. Verfahren zum Erkennen wenigstens eines zu verarbeitenden Signals, das von wenigstens einem an einem Kraftfahrzeug angeordneten Schwingungssensor (10, 10') ausgegeben wird, wobei das Verfahren die folgenden Verfahrensschritte umfaßt:
a) Auswahl eines bestimmten Speicherplatzes in Abhängigkeit von wenigstens einem Motorbetriebsparameter (p) aus wenigstens einer kartographischen Tabelle (11a, 11'a), welche Daten enthält, die vorab in einen ersten Speicher (11, 11') geladen wurden,
b) Weiterleiten der in dem bestimmten Speicherplatz enthaltenen Daten vom ersten Speicher (11, 11') an Dekodiermittel (12, 12'),
c) Übertragen einer auf ein in einem zweiten Speicher (13, 13') gespeichertes Referenzvibrationssignal (Vréf) bezogenen Speicheradresse (A) sowie eines Zeitpunkts (to) der Emission dieses Referenzsignals (Vréf) von den Dekodiermitteln (12, 12') an den zweiten Speicher (13, 13'), wobei die Speicheradresse und der Zeitpunkt zu den in dem bestimmten Speicherplatz des ersten Speichers (11, 11') enthaltenen Daten gehören,
d) Zuführen des Referenzsignals (Vréf) an einen ersten Eingang (14b, 14'b) von Multiplikationsmitteln (14, 14'),
e) Zuführen eines vom Schwingungssensor (10, 10') ausgegebenen Signals (Ve) an einen zweiten Eingang (14a, 14'a) der Multiplikationsmittel (14, 14'),
f) Erzeugen des Produkts der den Eingängen (14a, 14b; 14'a, 14'b) zugeführten Signale in den Multiplikationsmitteln (14, 14'),
g) Gleichrichten des Ausgangssignals der Multiplikationsmittel in Gleichrichtermitteln (15, 15'),
h) Integrieren des Ausgangssignals der Gleichrichtermittel (15, 15') in Integrationsmitteln (16, 16'),
i) Nullstellen der Integrationsmittel (16, 16') mit Hilfe eines von den Dekodiermitteln (12, 12') ausgehend von in dem bestimmten Speicherplatz des ersten Speichers (11, 11') enthaltenen Daten erzeugten Signals und
j) Erkennen des Vorhandenseins bzw. der Abwesenheit des zu verarbeitenden Signals durch einen in Vergleichsmitteln (11b, 11'b) durchgeführten Vergleich des Ausgangssignals (Vs) der Integrationsmittel (16, 16') mit einer Schwelle (S).

2. Verfahren nach Anspruch 1, **dadurch gekennzeichnet, daß** die Schwelle (S) in Abhängigkeit vom Motorbetriebsparameter (p) aus dem ausgewählten Speicherplatz extrahiert wird.

3. Verfahren nach einem der Ansprüche 1 und 2, **dadurch gekennzeichnet, daß** das Verfahren u.a. Diagnose-Verfahrensschritte enthält, die nach der Durchführung der Verfahrensschritte a) und b) erfolgen und darin bestehen,
- im Verfahrensschritt c) eine Speicheradresse (A) und einen Emissionszeitpunkt (to) zu übertragen, die sich auf ein Diagnose-Referenzsignal (Vref diag) beziehen,
- das Referenzsignal (Vréf) in den Verfahrensschritten d) bis i) durch das Diagnose-Referenzsignal (Vref diag) zu ersetzen und den Verfahrensschritt j) durch Verfahrensschritte zu ersetzen, die darin bestehen
- das Ausgangssignal (Vs) der Integrationsmittel (16, 16') in den Vergleichsmitteln (11b, 11'b) mit einer Schwelle zu vergleichen, die in der kartographischen Tabelle (11a, 11'a) enthalten ist und
- festzulegen, daß der Schwingungssensor (10, 10') abgeschaltet ist, wenn das Ergebnis des Vergleichs im Binärwert "0" besteht bzw.
- festzulegen, daß der Schwingungssensor (10, 10') kurzgeschlossen ist, wenn das Ergebnis des Vergleichs im Binärwert "1" besteht.

4. Verfahren nach einem der Ansprüche 1 bis 3, **dadurch gekennzeichnet, daß** das Verfahren u.a. Diagnose-Verfahrensschritte umfaßt, die darin bestehen
- in Abhängigkeit von einem aus der kartogrpahischen Tabelle (11a, 11'a) stammenden und durch die Dekodiermittel (12, 12') an Umschaltmittel (17, 17') gesandten Umschaltbefehl den ersten Eingang (14b, 14'b) der Multiplikationsmittel (14, 14') mit deren zweiten Eingang (14a, 14'a) zu verbinden,
- nach Durchführung der Verfahrensschritte a) und b) im Verfahrensschritt c) eine Speicheradresse (A) und einen Emissionszeitpunkt (to), die sich auf ein Diagnose-Referenzsignal (Vréf diag) beziehen, zu übertragen,
- das Referenzsignal (Vréf) in den Verfahrensschritten d) bis i) durch das Diagnose-Referenzsignal (Vréf diag) zu ersetzen und den Verfahrensschritt j) durch Verfahrensschritte zu ersetzen, die darin bestehen
- das Ausgangssignal (Vs) der Integrationsmittel (16, 16') in den Vergleichsmitteln (11b, 11'b) mit einem in der kartographischen Tabelle (11a, 11'a) gespeicherten Diagnose-Referenzwert zu vergleichen, der dem Quadrat des integrierten, gleichgerichteten Diagnose-Referenzsignals entspricht, und
- zu bestimmen, daß der Gesamtbetrieb korrekt funktioniert, sofern das Signal (Vs) dem Wert des Diagnose-Referenzsignals (Vréf diag) entspricht.

5. Verfahren nach einem der Ansprüche 1 bis 4, **dadurch gekennzeichnet, daß** das Verfahren u.a. Verfahrensschritte umfaßt, die darin bestehen
- die vom zweiten Speicher (13') kommenden digitalen Signale mit einer durch die Dekodiermittel (12') ausgehend von in dem bestimmten Speicherplatz der kartographischen Tabelle (11'a) enthaltenen Daten erzeugten Verstärkung in analoge Signale umzuwandeln (19') und
- die analogen Ausgangssinale der Integrationsmittel (16') in digitale Signale umzuwandeln.

6. Verfahren nach einem der Ansprüche 1 bis 5, **dadurch gekennzeichnet, daß** das Verfahren u.a. Verfahrensschritte zur Erzeugung von Referenzsignalen (Vréf) enthält, die darin bestehen
- ein experimentell ermitteltes Signal für eine vorgegebene Gruppe von Werten für Motorbetriebsparameter (p) auszuwählen,
- dieses Signal zu isolieren, indem ihm ein Zeitfenster (21) zugewiesen wird, dessen Eigenschaften dem Zeitpunkt des Auftretens des Signals entsprechen,
- dieses Signal in einem Bandfilter (22) zu filtern, dessen Bandbreite dem des Signals entspricht, und
- das am Ausgang des Bandfilters (22) gewonnene Referenzsignal (Vréf) an den zweiten Speicher (13, 13') zu übertragen.

7. Verfahren nach einem der Ansprüche 1 bis 6, wobei es sich bei dem Sensor (10, 10') um einen Sensor zum Erkennen eines Klopfens eines Verbrennungsmotors handelt.

8. Vorrichtung zum Erkennen wenigstens eines zu verarbeitenden Signals, das von wenigstens einem Schwingungssensor (10, 10') ausgegeben wird, welcher an einem Kraftfahrzeug angeordnet ist, wobei die Vorrichtung zur Durchführung des Verfahrens nach einem der Ansprüche 1 bis 7 dient und die folgenden Bestandteile umfaßt:
- Gleichrichtermittel (15, 15'), die zur Gleichrichtung eines ihnen zugeführten Eingangssignals dienen, und
- Integrationsmittel (16, 16'), die zur Integration des Ausgangssignals der Gleichrichtermittel (15, 15') dienen,
wobei die Vorrichtung **dadurch gekennzeichnet** ist, daß sie u.a. die folgenden Bestandteile umfaßt:
- einen Mikroprozessor (11, 11') mit einem ersten Speicher, der wenigstens eine karthographische Tabelle (11a, 11'a) mit vorab in den ersten Speicher geladenen Daten enthält, wobei in dieser kartographischen Tabelle (11a, 11'a) ein bestimmter Speicherplatz in Abhängigkeit von wenigstens einem am Eingang durch den Mikroprozessor (11, 11') empfangenen Motorbetriebsparameter (p) ausgewählt wird,
- Dekodiermittel (12, 12'), die einerseits zur Übertragung von in dem bestimmten Speicherplatz vorhandenen Daten an die Dekodiermittel (12, 12') durch einen Verbindungsbus (18, 18') mit dem ersten Speicher des Mikroprozessors (11, 11') und andererseits am Ausgang mit zweiten Speichermitteln (13, 13') verbunden sind, um an diese Mittel eine auf ein in diesen zweiten Speichermitteln (13, 13') gespeichertes Referenzvibrationssignal (Vréf) bezogene Speicheradresse (A) sowie einen Emissionszeitpunkt (to) dieses Referenzsignals (Vréf) zu übertragen, und die zudem zur Emission von die jeweilige Integrationsdauer bestimmenden Nullstell-Signalen mit den Integrationsmitteln (16, 16') verbunden sind,
- Multiplikationsmittel (14, 14') mit einem ersten Eingang (14b, 14'b), der zum Empfang des Referenzsignals (Vréf) mit dem Ausgang der zweiten Speichermittel (13, 13') verbunden ist, und mit einem zweiten Eingang (14a, 14'a), der zum Empfang eines vom Schwingungssensor (10, 10') ausgegebenenen Signals (Ve) mit diesem Sensor (10, 10') verbunden ist, wobei der Ausgang der Multiplikationsmittel mit dem Eingang der Gleichrichtermittel (15, 15') verbunden ist,
- wobei der Mikroprozessor (11, 11') zudem Vergleichsmittel (11b, 11'b) umfaßt, die mit dem Ausgang der Integrationsmittel (16, 16') verbunden sind und zum Vergleich des Ausgangssignals (Vs) der Integrationsmittel (16, 16') mit einer Schwelle (S) und zum Erkennen des Vorhandenseins bzw. der Abwesenheit des zu verarbeitenden Signals dienen.

9. Vorrichtung nach Anspruch 8, **dadurch gekennzeichnet, daß** die Vorrichtung u.a. Diagnosemittel umfaßt, welche ihrerseits zwischen den Eingängen (14a, 14b; 14'a, 14'b) der Multiplikationsmittel (14, 14') angeordnete Umschaltmittel (17, 17') umfassen, die mit einem Ausgang der Dekodiermittel (12, 12') verbunden sind.

10. Vorrichtung nach Anspruch 8 oder 9, **dadurch gekennzeichnet, daß** die Vorrichtung u.a. zwischen dem Ausgang der zweiten Speichermittel (13') und dem ersten Eingang (14'b) der Multiplikationsmittel (14') angeordnete und mit den Dekodiermitteln (12') verbundene Digital-/Analog-Wandlermittel (19') sowie zwischen dem Ausgang der Integrationsmittel (16') und dem Eingang des Mikroprozessors (11') angeordnete Analog-/Digital-Wandlermittel (20') umfaßt.

11. Vorrichtung nach einem der Ansprüche 8 bis 10, **dadurch gekennzeichnet, daß** es sich beim Schwingungssensor (10, 10') um einen piezoelektrischen Sensor handelt.

12. Vorrichtung nach einem der Ansprüche 8 bis 11, **dadurch gekennzeichnet, daß** die zweiten Speichermittel (13, 13') aus einem umprogrammierbaren Speicher bestehen.

13. Vorrichtung nach einem der Ansprüche 8 bis 12, **dadurch gekennzeichnet, daß** der Bus (18, 18') zur Verbindung zwischen dem Mikroprozessor (11, 11') und den Dekodiermitteln (12, 12') aus einem Bus zur seriellen Verbindung besteht.

14. Vorrichtung nach einem der Ansprüche 8 bis 12, **dadurch gekennzeichnet, daß** der Bus (18, 18') zur Verbindung zwischen dem Mikroprozessor (11, 11') und den Dekodiermitteln (12, 12') aus einem Bus zur parallelen Verbindung besteht.

15. Vorrichtung nach einem der Ansprüche 8 bis 14, **dadurch gekennzeichnet, daß** die Vorrichtung in Form einer anwendungsspezifischen integrierten Schaltung ausgebildet ist.

## Claims

1. Method of recognising at least one signal to be processed, which is emitted by at least one vibration sensor (10, 10') mounted on a motor vehicle, the method comprising stages (g) and (h) consisting in:
(a) selecting, in an least one mapping table (11a, 11'a) of data previously loaded in a first memory (11, 11'), a unique memory location, depending upon at least one engine operation parameter (p),
(b) transferring from the first memory (11, 11') to decoding means (12, 12') the data contained in the said unique memory location,
(c) transmitting to a second memory (13, 13') from the decoding means (12, 12'), amongst the data contained in the said unique memory location of the first memory (11, 11'), a memory address (A) associated with a reference vibration signal (Vref), which is stored in the said second memory (13, 13') and a time of output (to) of the said reference signal (Vref),
(d) feeding the said reference signal (Vref) to a first input (14b, 14'b) of multiplication means (14, 14'),
(e) feeding a signal (Ve), which is emitted from the vibration sensor (10, 10'), to a second input (14a, 14à) of the multiplication means (14, 14'),
(f) effecting the product of the input signals (14a, 14b; 14'a, 14'b) in the multiplication means (14, 14'),
(g) rectifying the output signal of the multiplication means in rectification means (15, 15'),
(h) integrating into integration means (16, 16') the output signal of the said rectification means (15, 15'),
(i) restoring to zero the integration means (16, 16') with the assistance of a signal supplied by the decoding means (12, 12') from the data contained in the said unique memory location of the first memory (11, 11'), and
(j) recognising the presence or absence of the said signal to be processed by comparison, in comparison means (11b, 11'b), of the output signal (Vs) of the integration means (16, 16') with a threshold (S) .

2. Method according to Claim 1, **characterised in that** the threshold (S) is extracted from the memory location selected depending upon the said engine operation parameter (p).

3. Method according to any one of the Claims 1 and 2, **characterised in that** it also comprises diagnostic stages consisting, after completion of the stages (a) and (b), in
transmitting, in the stage (c), a memory address (A) and a time of output (to) associated with a diagnostic reference signal (Vref diag),
substituting the diagnostic reference signal (Vref diag) for the reference signal (Vref) in the stages (d) to (i), and replacing the stage (j) by the stages consisting in
comparing, in the comparison means (11b, 11'b), the output signal (Vs) of the integration means (16, 16') with a threshold contained in the mapping table (11a, 11'a),
determining that the vibration sensor (10, 10') is disconnected if the result of the comparison is a logical "0",
determining that the vibration sensor (10, 10') is in short circuit if the result of the comparison is a logical "1".

4. Method according to any one of the Claims 1 to 3, **characterised in that** it also comprises diagnostic stages consisting in
linking the first input (14b, 14'b) of the multiplication means (14, 14') with their second input (14a, 14'a) depending upon a switching order derived from the mapping table (11a, 11'a) and sent by the means *of* decoding (12, 12') to means of switching (17, 17'),
after completion of the stages (a) and (b), transmitting, in the stage (c), a memory address (A) and a time of output (to) associated with a diagnostic reference signal (Vref diag),
substituting the diagnostic reference signal (Vref diag) for the reference signal (Vref) in the stages (d) to (i), and replacing the stage (j) by the stages consisting in
comparing, in the comparison means (11b, 11'b), the output signal (Vs) of the integration means (16, 16') with a diagnostic reference value stored in the mapping table (11a, 11'a) and corresponding to the square of the integrated, rectified diagnostic reference signal and
determining that the global functioning is correct if the signal (Vs) is equal to the diagnostic reference value (Vref diag).

5. Method according to any one of the Claims 1 to 4, **characterised in that** it also comprises the stages consisting in
converting (19') the digital signals from the second memory (13') into analog signals, with a gain supplied by the decoding means (12') from the data contained in the said unique memory location of the mapping table (11'a), and
converting (20') the analog output signals of the means of integration (16') into digital signals.

6. Method according to any one of the Claims 1 to 5, **characterised in that** it also comprises stages of creation of reference signals (Vref) consisting in
selecting a signal recognised experimentally for a given group of values of engine operation parameters (p),
isolating this signal by applying a temporal window (21) to it, wherein the characteristics of this temporal window (21) correspond to the moment at which the signal appears,
filtering this signal in a bandpass filter (22), of which the bandpass corresponds to that of the signal,
transmitting the reference signal (Vref) obtained at the exit of the bandpass filter (22) to the second memory (13, 13').

7. Method according to any one of the Claims 1 to 6, in which the sensor (10, 10') is a sensor for sensing knocking of an internal combustion engine.

8. Device for recognising at least one signal to be processed, which is emitted from at least one vibration sensor (10, 10') loaded on a motor vehicle, and designed to implement the method according to any one of the Claims 1 to 7, wherein the device comprises
rectification means (15, 15'), which are designed to rectify an input signal that is applied to them, and
integration means (16, 16'), which are designed to integrate the output signal of the said rectification means (15, 15')
and **characterised in that** it also comprises
a micro-processor (11, 11') with a first memory containing at least one mapping table (11a, 11'a) of data previously loaded in the said first memory, and in which mapping table (11a, 11'a) a unique memory location can be selected depending upon at least one engine operation parameter (p), which is received at the input by the said micro-processor (11, 11'),
decoding means (12, 12') connected on the one hand to the said first memory of the micro-processor (11, 11') by a connection bus (18, 18') for the transfer to the decoding means (12, 12') of the data contained in the said unique memory location, and on the other hand, at the output, to a second memory means (13, 13'), for the transfer to the latter, among the data transferred to the decoding means (12, 12') from the said unique memory location, of a memory address (A) associated with a reference vibration signal (Vref), which is stored in the said second memory means (13, 13'), and of a time of output (to) of the said reference signal (Vref), as well as to the said integration means (16, 16') for the emission of signals of restoration to zero defining durations of integration,
multiplication means (14, 14'), with a first input (14b, 14'b) connected to the output of the second memory means (13, 13') for receiving the said reference signal (Vref), and a second input (14a, 14'a) connected to the vibration sensor (10, 10') for receiving a signal (Ve) emitted from the said sensor (10, 10') and of which the output is connected to the input of the said rectification means (15, 15'),
the said micro-processor (11, 11') also comprising comparison means (11b, 11'b), which are connected to the output of the said integration means (16, 16') for comparing the output signal (Vs) of the said integration means (16, 16') with a threshold (S) and for recognising the presence or absence of the said signal to be processed.

9. Device according to Claim 8, **characterised in that** it also comprises diagnostic means comprising switching means (17, 17') arranged between the inputs (14a, 14b; 14'a, 14'b) of the multiplication means (14, 14'), and connected to an output of the decoding means (12, 12').

10. Device according to any one of the Claims 8 and 9, **characterised in that** it also comprises digital analog conversion means (19') arranged between the output of the second memory means (13') and the first input (14'b) of the multiplication means (14'), and connected to the decoding means (12'), and analogdigital conversion means (20') arranged between the output of the integration means (16') and the input of the micro-processor (11').

11. Device according to any one of the Claims 8 to 10, **characterised in that** the vibration sensor (10, 10') is a piezoelectric sensor.

12. Device according to any one of the Claims 8 to 11, **characterised in that** the second memory means (13, 13') consist in a re-programmable memory.

13. Device according to any one of the Claims 8 to 12, **characterised in that** connection bus (18, 18') between the micro-processor (11, 11') and the decoding means (12, 12') is a serial connection bus.

14. Device according to any one of the Claims 8 to 12, **characterised in that** the connection bus (18, 18') between the micro-processor (11, 11') and the decoding means (12, 12') is a parallel connection bus.

15. Device according to any one of the Claims 8 to 14, **characterised in that** it is realised in the form of an application specific integrated circuit.
